Europäisches Patentamt

European Patent Office

Office européen des brevets

(19)

(11) Veröffentlichungsnummer : **0 355 280 B1**

(12)

# EUROPÄISCHE PATENTSCHRIFT

(45) Veröffentlichungstag der Patentschrift :
**08.07.92 Patentblatt 92/28**

(51) Int. Cl.$^5$ : **F16F 15/12,** B29C 71/00

(21) Anmeldenummer : **89109822.0**

(22) Anmeldetag : **31.05.89**

(54) **Verfahren zur Herstellung eines Torsionsschwingungsdämpfers.**

(30) Priorität : **23.07.88 DE 3825063**

(43) Veröffentlichungstag der Anmeldung :
**28.02.90 Patentblatt 90/09**

(45) Bekanntmachung des Hinweises auf die
Patenterteilung :
**08.07.92 Patentblatt 92/28**

(84) Benannte Vertragsstaaten :
**AT DE ES FR GB IT SE**

(56) Entgegenhaltungen :
**DE-A- 2 829 253**
**GB-A- 835 314**

(56) Entgegenhaltungen :
**PATENT ABSTRACTS OF JAPAN, Band 7, Nr. 275 (M-261)[1420], 21. Dezember 1983; & JP-A-58 152 953 (MITSUBISHI JIDOSHA KOGY-OK.K.) 10-09-1983**
**PATENT ABSTRACTS OF JAPAN, Band. 7, Nr. 187 (M-236)[1332], 16. August 1983; & JP-A-58 88 246 (MITSUBISHI JIDOSHA KOGYOK.K.) 26-05-1983**

(73) Patentinhaber : **Firma Carl Freudenberg**
**Höhnerweg 2-4**
**W-6940 Weinheim/Bergstrasse (DE)**

(72) Erfinder : **Andrä, Rainer Horst, Dr.**
**Dehrner Strasse 10**
**W-6250 Limburg 5 (DE)**
Erfinder : **Ullrich, Günter**
**Hagenstrasse 27**
**W-6944 Hemsbach (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft ein Verfahren zur Herstellung eines Torsionsschwingungsdämpfers, bei dem ein topfartig ausgebildeter Nabenring verwendet wird dessen Mantel im Bereich seines äußeren Randes mit einem im wesentlichen radial nach außen weisenden Ringvorsprung versehen ist und bei dem der Ringvorsprung und der Mantel des Nabenringes durch eine einvulkanisierte Zwischenschicht aus Gummi an den jeweils gegenüberliegenden Flächen des Trägheitsringes verbunden werden und, wobei der Mantel im Auschluß an die Vulkanisierung der Gummimischung bleibend in radialer Richtung aufgeweitet wird.

Ein solches Verfahren gelangt bei der Herstellung des Torsionsschwingungsdämpfers nach der DE-AS 11 66 552 zur Anwendung. Es bedient sich der Verwendung der Hitzevulkanisierung der eingesetzten Gummimischung, was während der sich an die Vulkanisierung anschließenden Abkühlphase die Entstehung radial gerichteter Schrumpfspannungen in dem gebildeten Gummiring zur Folge hat. Eine vorzeitige Zerstörung des Gummiringes und eine nur eingeschränkte Anpaßbarkeit an besondere Gegebenheiten des Anwendungsfalles sind hiervon die Folge.

Aus der DE-A-28 29 253 ist ein Verfahren zur Herstellung eines Torsionsschwingungdämpfers bekannt, bei dem in einem sich nur in radialer Richtung erstreckenden Zwischenraum zwischen dem Trägheitsring und dem Nabenring eine Zwischenschicht aus Gummi angeordnet und im Anschluß an ihre Hitzevulkanisierung einer nur in radialer Richtung wirksamen Zusammenpressung unterworfen wird.

Diese ist auf der gesamten axialen Länge der Zwischenschicht in quantitativer Hinsicht von völlig übereinstimmender Größe.

Ein solches Verfahren zur Herstellung eines Torsionsschwingungsdämpfers ist außerdem aus den japanischen Schriften JP-A-58-88246 und JP-A-58-152953 bekannt.

Danach ist eine Zwischenschicht aus Gummi sowohl in radialer als auch in axialer Richtung zwischen einem Trägheitsring und einem Nabenring, der einen Ringvorsprung aufweist, angeordnet. Im Anschluß an die Hitzevulkanisierung wird eine Aufweitung des Nabenringes nur in radialer Richtung durchgeführt. Dadurch lassen sich zwar die Schrumpfspannungen in der radialen Zwischenschicht zwischen Nabenring und Trägheitsring vermindern, allerdings bleiben die Schrumpfspannungen in der axial angeordneten Zwischenschicht aus Gummi, zwischen dem Ringvorsprung des Nabenringes und dem Trägheitsring erhalten. Zusätzlich zu den durch die Hitzevulkanisierung hervorgerufenen Schrumpfspannungen ergeben sich in diesem Bereich zusätzliche Schubspannungen durch die radiale Aufweitung des Nabenringes. Eine Beeinträchtigung der Gebrauchseigenschaften bei verringerter Gebrauchsdauer ist hiervon die Folge.

Der Erfindung liegt die Aufgabe zugrunde, ein Verfahren der eingangs genannten Art derart weiterzuentwickeln, daß auch die den Trägheitsring auf den Ringvorsprung des Nabenringes abstützende Gummischicht weitgehend frei ist von Schrumpfspannungen, die durch die Vulkanisierung verursacht sind.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Bei dem erfindungsgemäßen Verfahren ist es vorgesehen, daß der Nabenring im Anschluß an die Vulkanisierung der Zwischenschicht im Bereich des dem Ringvorsprung zugewandten, axialen Endes in radialer Richtung stärker und im Bereich des entgegengesetzten, axialen Endes geringer in radialer Richtung aufgeweitet wird, wobei die unsymmetrische Aufweitung des Mantels des Nabenringes gleichzeitig eine gegenseitige Annäherung des Trägheitsringes und des Ringvorsprunges in axialer Richtung zur Folge hat. Durch die gegenseitige Annäherung des Trägheitsringes und des Ringvorsprunges in axialer Richtung wird eine Verminderung der herstellungsbedingt vorhandenen, radialen Schichtdicke der Zwischenschicht im Bereich des Mantels des Nabenringes erzielt. Die herstellungsbedingt vorhandenen Schrumpfspannungen sind dadurch zumindest stark reduziert. Der schließlich erhaltene Torsionsschwingungsdämpfer weist dadurch eine deutlich verbesserte Gebrauchsdauer auf.

Für die Durchführung des erfindungsgemäßen Verfahrens lassen sich nur Nabenringe verwenden, die im Anschluß an die Vulkanisierung des Gummiringes bleibend in ihrer Form verändert werden können. Die Verwendung von tiefziehfähigen Blechen und insbesondere solchen aus Stahl hat sich unter diesem Gesichtspunkt besonders bewährt.

Besonders gute Eigenschaften in dieser Hinsicht werden erhalten, wenn die Bereiche unterschiedlicher Aufweitung des Mantels des Nabenringes gleichmäßig ineinander übergehend ausgebildet werden und wenn ein Nabenring eingesetzt wird, dessen Profil dasjenige des Trägheitsringes innenseitig und im Bereich des Ringvorsprunges mit im wesentlichen übereinstimmenden Längen umgreift. Abweichende Gestaltungen des Profils des Trägheitsringes und des Nabenringes sind selbstverständlich ebenfalls möglich. Sie können Bauformen umfassen, bei denen der Trägheitsring zumindest in den dem Ringvorsprung und dem Mantel des Nabenringes senkrecht gegenüberliegenden Flächenbereichen ein abgerundetes Profil hat.

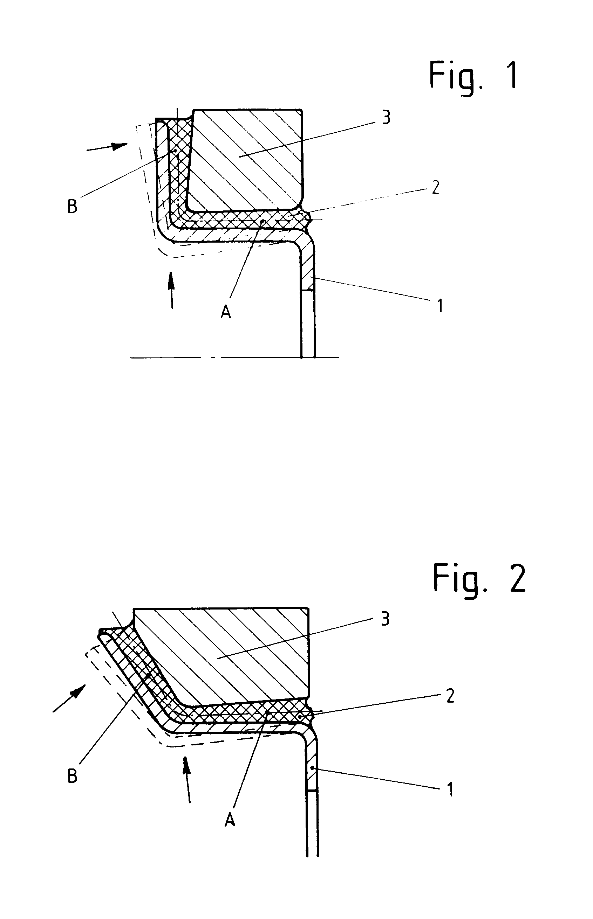

Das erfindungsgemäße Verfahren wird nachfolgend anhand der beigefügten Figuren 1 und 2 weiter verdeutlicht. Diese zeigen beispielhafte Ausführungen von gebrauchsfertigen Torsionsschwingungsdämpfern in halbgeschnittener Darstellung. Die Form, welche die Nabenringe 1 und die diese mit den Trägheitsringen 3 verbindenden Gummiringe 2 im Anschluß an die Vulkanisierung der Gummiringe 2 haben, ist jeweils durch eine gestrichelte Linie angedeutet.

Sie wird im Anschluß an die Vulkanisierung und Erkaltung der Gummiringe 2 in der durch Pfeile angedeuteten Weise verändert, so daß schließlich die Gestalt erhalten wird, die durch durchgehende Linienzüge umrissen ist. Sie ist vor allem dadurch gekennzeichnet, daß die durch die Hitzevulkanisierung im Zuge der anschließenden Erkaltung in den Gummiringen 2 aufgebauten Schrumpfspannungen weitestgehend abgebaut bzw. durch Druckvorspannungen ersetzt sind. Die Dauerhaltbarkeit der schließlich erhaltenen Torsionsschwingungsdämpfer ist dadurch deutlich verbessert.

## Patentansprüche

1. Verfahren zur Herstellung eines Torsionsschwingungsdämpfers, bei dem ein topfartig ausgebildeter Nabenring (1) verwendet wird, dessen Mantel im Bereich seines äußeren Randes mit einem im wesentlichen radial nach außen weisenden Ringvorsprung versehen ist und bei dem der Ringvorsprung und der Mantel des Nabenringes (1) durch eine einvulkanisierte Zwischenschicht (2) aus Gummi mit den jeweils gegenüberliegenden Flächen des Trägheitsringes (3) verbunden werden und wobei der Mantel im Anschluß an die Vulkanisierung der Zwischenschicht (2) aus Gummi bleibend in radialer Richtung aufgeweitet wird, dadurch gekennzeichnet, daß der Mantel des Nabenringes (1) im Anschluß an die Vulkanisierung der Zwischenschicht (2) aus Gummi im Bereich des dem Ringvorsprung zugewandten, axialen Endes in radialer Richtung stärker und im Bereich des entgegengesetzten, axialen Endes geringer in radialer Richtung aufgeweitet wird, wobei die unsymmetrische Aufweitung des Mantels des Nabenringes (1) gleichzeitig eine gegenseitige Annäherung des Trägheitsringes (3) und des Ringvorsprunges in axialer Richtung zur Folge hat.

2. Verfahren nach Anspruch 1, dadurch gekennzeichnet, daß ein Trägheitsring (3) verwendet wird, der im Bereich des dem Ringvorsprung zugewandten, axialen Endes einen kleineren Innendurchmesser aufweist, als im Berich des entgegengesetzten Endes.

3. Verfahren nach Anspruch 1 bis 2, dadurch gekennzeichnet, daß die unterschiedlichen Aufweitungen gleichmäßig ineinander übergehend ausgebildet werden.

4. Verfahren zur Herstellung eines Torsionsschwingungsdämpfers nach einem der Ansprüche 1 oder 3, dadurch gekennzeichnet, daß der verwendete Nabenring (1) ein Profil aufweist, das das Profil des Trägheitsringes (3) innenseitig und im Bereich des Ringvorsprunges mit im wesentlichen übereinstimmenden Längen umgreift.

## Claims

1. A process for producing a torsional vibration damper, in which a hub ring (1) of pot-shaped construction is used, the casing of which is provided in the region of its outer edge with an annular projection pointing essentially radially outwards, and in which the annular projection and the casing of the hub ring (1) are connected to the respectively opposite surfaces of the inertia ring (3) by a rubber intermediate layer (2) which is vulcanised in and the casing is permanently expanded in the radial direction after the vulcanisation of the rubber intermediate layer (2), characterised in that, after the vulcanisation of the rubber intermediate layer (2), the casing of the hub ring (1) undergoes greater expansion in the radial direction in the region of the axial end facing the annular projection and undergoes less expansion in the radial direction in the region of the opposite axial end, the asymmetric expansion of the casing of the hub ring (1) resulting simultaneously in a mutual approach of the inertia ring (3) and the annular projection in the axial direction.

2. A process according to claim 1, characterised in that an inertia ring (3) is used which has a smaller inside diameter in the region of the axial end facing the annular projection than in the region of the opposite end.

3. A process according to claim 1 or 2, characterised in that the different expansions are constructed such that they merge evenly into one another.

4. A process for producing a torsional vibration damper according to one of claims 1 or 3, characterised in that the hub ring (1) used has a profile which surrounds the profile of the inertia ring (3) on the inside and in the region of the annular projection with essentially corresponding lengths.

## Revendications

1. Procédé de fabrication d'un amortisseur d'oscillations de torsion, utilisant un anneau de moyeu (1) ayant la forme d'un pot, dont l'enveloppe est munie au niveau de son bord extérieur d'un rebord annulaire qui est dans l'essentiel tourné radialement vers l'extérieur, ledit rebord annulaire et l'enveloppe de l'anneau de moyeu (1) étant reliés aux surfaces opposées de l'anneau d'inertie (3) par une couche intermédiaire (2) en caoutchouc vulcanisé entre les deux et dans lequel, à la suite de la vulcanisation de la couche intermédiaire (2) en caoutchouc, l'enveloppe est élargie de façon permanente en direction radiale, caractérisé en ce qu'à la suite de la vulcanisation de la couche intermédiaire (2) en caoutchouc, l'enveloppe de l'anneau de moyeu (1) est plus élargie en direction radiale au niveau de l'extrémité axiale tournée vers le rebord annulaire, et moins élargie en direction radiale au niveau de l'extrémité axiale opposée, l'élargissement asymétrique de l'enveloppe de l'anneau de moyeu (1) provoquant en même temps un rapprochement mutuel de l'anneau d'inertie (3) et du rebord annulaire en direction axiale.

2. Procédé selon la revendication 1, caractérisé en ce qu'on utilise un anneau d'inertie (3) présentant un diamètre interne qui est plus petit au niveau de l'extrémité axiale tournée vers le rebord annulaire qu'au niveau de l'extrémité opposée.

3. Procédé selon la revendication 1 ou 2, caractérisé en que les élargissements différenciés sont exécutés de façon à obtenir une transition uniforme.

4. Procédé de fabrication d'un amortisseur d'oscillations de torsion selon l'une quelconque des revendications 1 ou 3, caractérisé en ce que l'anneau de moyeu (1) utilisé présente un profil qui enveloppe le profil de l'anneau d'inertie (3) sur sa face intérieure et au niveau du rebord annulaire avec des longueurs qui coïncident dans l'essentiel.

Fig. 1

3

B

2

A

1

Fig. 2

3

2

B

A

1